# EUROPEAN PATENT APPLICATION

(11) **EP 4 807 429 A1**
(43) Date of publication of application: **16.09.2026**
(21) Application number: 25839244.8
(22) Date of filing: 28.09.2025
(51) Int. Cl.: G02B 27/01

(54) **METHOD AND APPARATUS FOR ADJUSTING IMAGE OF VEHICLE-MOUNTED HEAD-UP DISPLAY, AND DEVICE AND MEDIUM**

(30) Priority: 24.01.2025 CN 202510121896
(71) Applicant: Beijing Jingwei Hirain Technologies Co., Inc., Beijing 100020 (CN)
(72) Inventor: CHENG, Yinuo, Beijing 100016 (CN); LI, Hao, Beijing 100016 (CN); AI, Fan, Beijing 100016 (CN); PENG, Hongze, Beijing 100016 (CN)
(74) Representative: Zacco Norway AS
(86) International application number: PCT/CN2025/124809
(87) International publication number: WO 2026/157312

(57) **Abstract**

A method and an apparatus for adjusting an image of an in-vehicle head-up display, a device and a medium are provided by embodiments of the present disclosure. The method includes: determining an attitude transformation matrix of a current vehicle coordinate system based on a world coordinate system at adjacent time instants; correcting, based on the attitude transformation matrix, a first coordinate transformation matrix between a coordinate system of a first in-vehicle camera and the vehicle coordinate system in the world coordinate system; determining an eye gaze transformation matrix for an eye of the driver in the vehicle coordinate system; correcting, based on the eye gaze transformation matrix, a second coordinate transformation matrix between a rendering coordinate system and a virtual camera coordinate system in rendering space of the virtual image; and adjusting, based on the corrected first coordinate transformation matrix and the corrected second coordinate transformation matrix, a position of the virtual image and a position of the target object in the virtual image displayed by the HUD. By adopting the above technical solutions, a problem that an object in a virtual image displayed by the HUD cannot be aligned with an actual object when attitude of a vehicle changes is solved.

## Description

The present disclosure claims the priority to Chinese Patent Application No. 202510121896.7, titled "METHOD AND APPARATUS FOR ADJUSTING IMAGE OF IN-VEHICLE HEAD-UP DISPLAY, DEVICE AND MEDIUM", filed on January 24, 2025 with Chinese National Intellectual Property Administration, which is incorporated herein by reference in its entirety.

### FIELD

The present disclosure relates to the field of automotive electronics, and in particular to a method and an apparatus for adjusting an image of an in-vehicle head-up display, a device and a medium.

### BACKGROUND

An Augmented Reality Head-Up Display (AR-HUD) is an in-vehicle display system that overlays virtual information onto the real world, and projects the overlaid information directly into a driver's field of vision. However, during operation of a vehicle, for example, when the vehicle passes over speed bumps, depressions or rocks, or the vehicle goes uphill or downhill, changes in attitude are inevitable, causing a virtual image displayed on an HUD to shake.

In the related art, object position information obtained by an advanced driver assistance system (ADAS) has excessive delay. In addition, communication and image rendering delays of an HUD software itself may also introduce delay. When the vehicle undergoes frequent attitude changes on the road, an object in a virtual image cannot be aligned with a position of an actual object, which would affect judgment and driving experience of a driver.

### SUMMARY

The present disclosure provides a method and an apparatus for adjusting an image of an in-vehicle head-up display, a device and a medium, to solve a problem that an object in a virtual image displayed by the HUD cannot be aligned with an actual object when attitude of a vehicle changes.

In a first aspect, the present disclosure provides a method for adjusting an image of an in-vehicle head-up display (HUD), where the HUD is to display vehicle operation information and driving assistance information through a virtual image, and the method provided by the present disclosure includes:
determining an attitude transformation matrix of a current vehicle coordinate system based on a world coordinate system at adjacent time instants;
correcting, based on the attitude transformation matrix, a first coordinate transformation matrix between a coordinate system of a first in-vehicle camera and the vehicle coordinate system in the world coordinate system, to obtain a corrected first coordinate transformation matrix, where the first coordinate transformation matrix is to transform position information of a target object in the coordinate system of the first in-vehicle camera into the vehicle coordinate system;
determining, based on a change in an eye gaze direction of a driver at adjacent time instants, an eye gaze transformation matrix for an eye of the driver in the vehicle coordinate system, where the eye of the driver is recognized by a second in-vehicle camera;
correcting, based on the eye gaze transformation matrix, a second coordinate transformation matrix between a rendering coordinate system and a virtual camera coordinate system in rendering space of the virtual image, to obtain a corrected second coordinate transformation matrix, where the second coordinate transformation matrix is to transform a position of the target object in the rendering coordinate system into the virtual camera coordinate system, and the rendering coordinate system is consistent with the vehicle coordinate system; and
adjusting, based on the corrected first coordinate transformation matrix and the corrected second coordinate transformation matrix, a position of the virtual image and a position of the target object in the virtual image displayed by the HUD.

In an embodiment, the determining an attitude transformation matrix of a current vehicle coordinate system based on a world coordinate system at adjacent time instants includes:
determining current attitude information of a current vehicle in the world coordinate system at a current time instant, and obtaining historical attitude information of the current vehicle in the world coordinate system at a previous time instant; and
determining, based on the current attitude information and the historical attitude information, the attitude transformation matrix of the current vehicle coordinate system based on the world coordinate system at adjacent time instants.

In an embodiment, the determining current attitude information of a current vehicle in the world coordinate system at a current time instant includes:
determining, based on attitude change of an inertial measurement unit (IMU) at the current time instant, the current attitude information of the current vehicle in the world coordinate system at the current time instant.

In an embodiment, the determining, based on attitude change of an inertial measurement unit (IMU) at the current time instant, the current attitude information of the current vehicle in the world coordinate system at the current time instant includes:
determining, based on the attitude change of the IMU at the current time instant, a first rotation matrix around an X-axis, a second rotation matrix around a Y-axis and a third rotation matrix around a Z-axis of the current vehicle in the world coordinate system at the current time instant, where the X-axis, the Y-axis and the Z-axis are perpendicular to each other; and
multiplying the third rotation matrix, the second rotation matrix and the first rotation matrix sequentially, to obtain the current attitude information of the current vehicle in the world coordinate system at the current time instant.

In an embodiment, the determining, based on a change in an eye gaze direction of a driver at adjacent time instants, an eye gaze transformation matrix for an eye of the driver in the vehicle coordinate system includes:
determining, based on a rotation matrix for the eye gaze direction of the driver and a position transformation matrix for the eye of the driver at adjacent time instants, the eye gaze transformation matrix for the eye of the driver in the vehicle coordinate system.

In an embodiment, the determining, based on a rotation matrix for the eye gaze direction of the driver and a position transformation matrix for the eye of the driver at adjacent time instants, the eye gaze transformation matrix for the eye of the driver in the vehicle coordinate system includes:
transforming, based on a relative position relationship between the second in-vehicle camera and the current vehicle, position information of the eye of the driver in a coordinate system of the second in-vehicle camera into the vehicle coordinate system, to obtain position information of the eye of the driver based on the vehicle coordinate system;
taking a difference in the position information of the eye of the driver at adjacent time instants as the position transformation matrix for the eye of the driver at adjacent time instants;
determining, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants; and
combining the rotation matrix for the eye gaze direction of the driver at adjacent time instants and the position transformation matrix for the eye of the driver at adjacent time instants to form the eye gaze transformation matrix for the eye of the driver in the vehicle coordinate system.

In an embodiment, the determining, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants includes:
forming, based on the Rodrigues formula, the rotation matrix for the eye gaze direction of the driver at adjacent time instants by using the rotation axis and the rotation angle between the current gaze vector corresponding to the eye gaze direction of the driver at the current time instant and the historical gaze vector at the previous time instant,
where the rotation axis and the rotation angle between the current gaze vector corresponding to the eye gaze direction of the driver at the current time instant and the historical gaze vector at the previous time instant are respectively obtained based on: $i = z \left(t-1\right) \times z \left(t\right) ;$ and $cos \left(δ\right) = \frac{z \left(t-1\right) z \left(t\right)}{\left‖z\left(t-1\right)\right‖ \times \left‖z\left(t\right)\right‖} ,$
where z(t) represents the current gaze vector corresponding to the eye gaze direction of the driver at the current time instant, z(t - 1) represents the historical gaze vector corresponding to the eye gaze direction of the driver at the previous time instant, i represents the rotation axis between the current gaze vector and the historical gaze vector at the previous time instant, and δ represents the rotation angle between the current gaze vector and the historical gaze vector at the previous time instant.

In an embodiment, the correcting, based on the attitude transformation matrix, a first coordinate transformation matrix between a coordinate system of a first in-vehicle camera and the vehicle coordinate system in the world coordinate system includes:
correcting the first coordinate transformation matrix between the coordinate system of the first in-vehicle camera and the vehicle coordinate system in the world coordinate system based on: ${M}_{M}^{′} = T b \left(t-1\right) b \left(t\right) i {M}_{M} ,$
where ${M}_{M}^{′}$ represents the corrected first coordinate transformation matrix, ***M**_{M}* represents a first coordinate transformation matrix before correction, and $T b \left(t-1\right) b \left(t\right) i$ represents the attitude transformation matrix of the current vehicle coordinate system based on the world coordinate system at adjacent time instants; and
where the correcting, based on the eye gaze transformation matrix, a second coordinate transformation matrix between a rendering coordinate system and a virtual camera coordinate system in rendering space of the virtual image includes:
   correcting the second coordinate transformation matrix between the rendering coordinate system and the virtual camera coordinate system in the rendering space of the virtual image based on: ${M}_{V}^{′} = {T}_{d \left(t-1\right)}^{d \left(t\right)} {M}_{V} ,$
   where ${M}_{V}^{′}$ represents the corrected second coordinate transformation matrix, *M_{V}* represents a second coordinate transformation matrix before correction, and ${T}_{d \left(t-1\right)}^{d \left(t\right)}$ represents an eye gaze transformation matrix for the eye of the driver in the vehicle coordinate system at adjacent time instants.

In a second aspect, the present disclosure further provides apparatus for adjusting an image of an in-vehicle head-up display (HUD), where the HUD is to display vehicle operation information and driving assistance information through a virtual image, and the apparatus provided by the present disclosure includes:
an attitude transformation matrix determination module, configured to determine an attitude transformation matrix of a current vehicle coordinate system based on a world coordinate system at adjacent time instants;
a first correction module, configured to correct, based on the attitude transformation matrix, a first coordinate transformation matrix between a coordinate system of a first in-vehicle camera and a vehicle coordinate system in the world coordinate system, to obtain a corrected first coordinate transformation matrix, where the first coordinate transformation matrix is to transform position information of a target object in the coordinate system of the first in-vehicle camera into the vehicle coordinate system;
an eye gaze transformation matrix determination module, configured to determine, based on a change in an eye gaze direction of a driver at adjacent time instants, an eye gaze transformation matrix for an eye of the driver in the vehicle coordinate system, where the eye of the driver is recognized by a second in-vehicle camera;
a second correction module, configured to correct, based on the eye gaze transformation matrix, a second coordinate transformation matrix between a rendering coordinate system and a virtual camera coordinate system in rendering space of the virtual image, to obtain a corrected second coordinate transformation matrix, where the second coordinate transformation matrix is to transform a position of the target object in the rendering coordinate system into the virtual camera coordinate system, and the rendering coordinate system is consistent with the vehicle coordinate system; and
an image position adjustment module, configured to adjust, based on the corrected first coordinate transformation matrix and the corrected second coordinate transformation matrix, a position of the virtual image and a position of the target object in the virtual image displayed by the HUD.

In an embodiment, the attitude transformation matrix determination module includes:
an attitude information determination unit, configured to determine current attitude information of a current vehicle in the world coordinate system at a current time instant, and obtaining historical attitude information of the current vehicle in the world coordinate system at a previous time instant; and
an attitude transformation matrix determination unit, configured to determine, based on the current attitude information and the historical attitude information, the attitude transformation matrix of the current vehicle coordinate system based on the world coordinate system at adjacent time instants.

In an embodiment, the attitude information determination unit includes:
an attitude information determination subunit, configured to determine, based on attitude change of an inertial measurement unit (IMU) at the current time instant, the current attitude information of the current vehicle in the world coordinate system at the current time instant.

In an embodiment, the attitude information determination subunit is specifically configured to:
determine, based on the attitude change of the IMU at the current time instant, a first rotation matrix around an X-axis, a second rotation matrix around a Y-axis and a third rotation matrix around a Z-axis of the current vehicle in the world coordinate system at the current time instant, where the X-axis, the Y-axis and the Z-axis are perpendicular to each other; and
multiply the third rotation matrix, the second rotation matrix and the first rotation matrix sequentially, to obtain the current attitude information of the current vehicle in the world coordinate system at the current time instant.

In an embodiment, the eye gaze transformation matrix determination module includes:
an eye gaze transformation matrix determination unit, configured to determine, based on the change in the eye gaze direction of the driver, a rotation matrix for the eye gaze direction of the driver and a position transformation matrix for the eye of the driver at adjacent time instants, the eye gaze transformation matrix for the eye of the driver in the vehicle coordinate system.

In an embodiment, the eye gaze transformation matrix determination unit includes:
an eye position information determination subunit, configured to transform, based on a relative position relationship between the second in-vehicle camera and the current vehicle, position information of the eye of the driver in a coordinate system of the second in-vehicle camera into the vehicle coordinate system, to obtain position information of the eye of the driver based on the vehicle coordinate system;
an eye position transformation matrix determination subunit, configured to take a difference in the position information of the eye of the driver at adjacent time instants as the position transformation matrix for the eye of the driver at adjacent time instants;
a gaze direction rotation matrix determination subunit, configured to determine, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants; and
an eye gaze transformation matrix forming subunit, configured to combine the rotation matrix for the eye gaze direction of the driver at adjacent time instants and the position transformation matrix for the eye of the driver at adjacent time instants to form the eye gaze transformation matrix for the eye of the driver in the vehicle coordinate system.

In an embodiment, the gaze direction rotation matrix determination sub-unit is specifically configured to:
form, based on the Rodrigues formula, the rotation matrix for the eye gaze direction of the driver at adjacent time instants by using the rotation axis and the rotation angle between the current gaze vector corresponding to the eye gaze direction of the driver at the current time instant and the historical gaze vector at the previous time instant,
where the rotation axis and the rotation angle between the current gaze vector corresponding to the eye gaze direction of the driver at the current time instant and the historical gaze vector at the previous time instant are respectively obtained based on: $i = z \left(t-1\right) \times z \left(t\right) ;$ and $cos \left(δ\right) = \frac{z \left(t-1\right) z \left(t\right)}{\left‖z\left(t-1\right)\right‖ \times \left‖z\left(t\right)\right‖} ,$
where ***z***(*t*) represents the current gaze vector corresponding to the eye gaze direction of the driver at the current time instant, ***z***(*t* - 1) represents the historical gaze vector corresponding to the eye gaze direction of the driver at the previous time instant, ***i*** represents the rotation axis between the current gaze vector and the historical gaze vector at the previous time instant, and *δ* represents the rotation angle between the current gaze vector and the historical gaze vector at the previous time instant.

In an embodiment, the first correction module is specifically configured to:
correct the first coordinate transformation matrix between the coordinate system of the first in-vehicle camera and the vehicle coordinate system in the world coordinate system based on: ${M}_{M}^{′} = T b \left(t-1\right) b \left(t\right) i {M}_{M} ,$
where ${M}_{M}^{′}$ represents the corrected first coordinate transformation matrix, ***M**_{M}* represents a first coordinate transformation matrix before correction, and $T b \left(t-1\right) b \left(t\right) i$ represents the attitude transformation matrix of the current vehicle coordinate system based on the world coordinate system at adjacent time instants; and
the second correction module is specifically configured to:
   correct the second coordinate transformation matrix between the rendering coordinate system and the virtual camera coordinate system in the rendering space of the virtual image based on: ${M}_{V}^{′} = {T}_{d \left(t-1\right)}^{d \left(t\right)} {M}_{V} ,$
   where ${M}_{V}^{′}$ represents the corrected second coordinate transformation matrix, ***M**_{V}* represents a second coordinate transformation matrix before correction, and ${T}_{d \left(t-1\right)}^{d \left(t\right)}$ represents an eye gaze transformation matrix for the eye of the driver in the vehicle coordinate system at adjacent time instants.

In a third aspect, an embodiment of the present disclosure further provides an electronic device, including:
a memory storing an executable program code; and
a processor coupled to the memory,
where the processor calls the executable program code stored in the memory to perform the method for adjusting an image of an in-vehicle head-up display (HUD) provided by any embodiment of the present disclosure.

In a fourth aspect, an embodiment of the present disclosure further provides a computer-readable storage medium storing a computer program, where when executed by a processor, the computer program performs the method for adjusting an image of an in-vehicle head-up display (HUD) provided by any embodiment of the present disclosure.

In the technical solution provided by embodiments of the present disclosure, when attitude of a vehicle changes, a first coordinate transformation matrix between a coordinate system of a first in-vehicle camera and a vehicle coordinate system in the world coordinate system, and a second coordinate transformation matrix between a rendering coordinate system and a virtual camera coordinate system in rendering space are corrected. When drawing a virtual image by using the corrected first coordinate transformation matrix, the corrected second coordinate transformation matrix and a projection matrix, a position of the virtual image and a position of a target object in the virtual image can be adjusted accordingly to changes in the attitude of the vehicle. That is, when the attitude of the vehicle changes, the position of the target object in the virtual image can also be aligned with an actual position of the target object, avoiding driver dizziness caused by misalignment of the target object in the virtual image with an actual target object, thus improving driving experience of a driver.

### BRIEF DESCRIPTION OF THE DRAWINGS

To more clearly illustrate technical solutions in embodiments of the present disclosure or the related art, accompanying drawings used in the description of the embodiments or the related art are briefly introduced below. The drawings described below are only some embodiments of the present disclosure. For those skilled in the art, other drawings can be obtained based on these drawings without creative effort.
FIG. 1 is a schematic diagram of a change in a display area of HUD;
FIG. 2 is a schematic diagram of coordinate systems of various devices in a vehicle system;
FIG. 3 is a flowchart of a method for adjusting an image of an in-vehicle head-up display according to Embodiment 1 of the present disclosure;
FIG. 4 is a flowchart of determining an eye gaze transformation matrix of a driver according to Embodiment 1 of the present disclosure;
FIG. 5 is a structural block diagram of an apparatus for adjusting an image of an in-vehicle head-up display (HUD) according to Embodiment 2 of the present disclosure; and
FIG. 6 is a schematic structural diagram of an electronic device according to Embodiment 3 of the present disclosure.

### DETAILED DESCRIPTION

Technical solutions of the embodiments of the present disclosure will be clearly and completely described below with reference to the accompanying drawings. The described embodiments are only a part of the embodiments of the present disclosure, and not all of them. All other embodiments obtained by those skilled in the art based on the embodiments of the present disclosure without creative effort are within the scope of protection of the present disclosure.

It should be noted that the terms "including", "having" and any variations thereof, in the embodiments and drawings of the present disclosure are intended to cover non-exclusive inclusion. For example, a procedure, method, system, product, or device that includes a series of steps or units is not limited to the listed steps or units, but may optionally include steps or units not listed, or may optionally include other steps or units inherent to these processes, methods, products, or devices.

The present disclosure discloses a method and an apparatus for adjusting an image of an in-vehicle head-up display (HUD), a device and a medium. To more clearly and understandably explain the content of each embodiment of the present disclosure, the implementation principle of the present disclosure would be briefly introduced below.

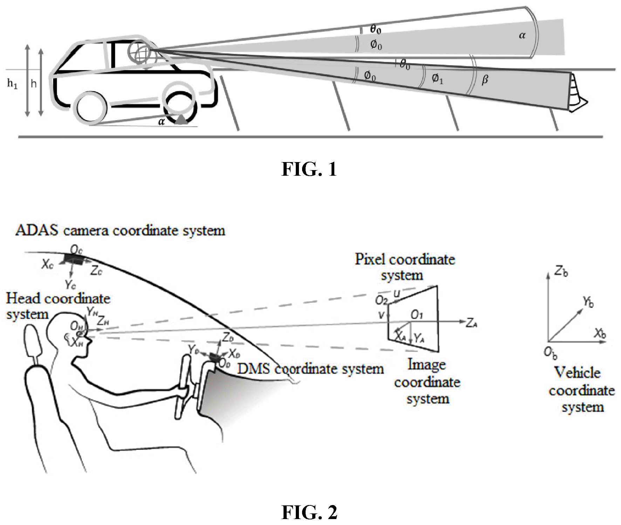

FIG. 1 is a schematic diagram of a change in a display area of HUD. As shown in FIG. 1, when a vehicle passes a rock, a rear axle is used as a fulcrum, and the front of the vehicle is lifted by *α*°. That is, the vehicle rotates *α*° along an x-axis. At this time, attitude of the vehicle changes, and an angle of a driver for viewing a target object changes from lower region A to upper region B. Due to a change in transformation of an image coordinate system, a virtual image of the HUD cannot be adjusted to an appropriate position in time, and the target object in the virtual image cannot align with an actual position of the target object. Furthermore, FIG. 2 is a schematic diagram of coordinate systems of various devices in a vehicle system. FIG. 2 involves ADAS camera coordinate system O_{C}X_{C}Y_{C}Z_{C}, head coordinate system O_{H}X_{H}Y_{H}Z_{H} of the driver, DMS coordinate system O_{D}X_{D}Y_{D}Z_{D}, pixel coordinate system O₂UV, image coordinate system O₂X_{A}Y_{A}Z_{A}, and vehicle coordinate system O_{b}X_{b}Y_{b}Z_{b}. As shown in FIG. 2, when an angle or a position of the vehicle body changes, coordinates of the target object in the vehicle coordinate system also change, and a position of an eye of the driver also changes. However, the change in the position of the eye of the driver is an unpredictable translation, which not completely follows translation and rotation of the vehicle. This is a key to solving an image stabilization problem.

The purpose of the present disclosure is to correct a first coordinate transformation matrix between a coordinate system of a first in-vehicle camera and a vehicle coordinate system by using an attitude transformation matrix before and after attitude change of the vehicle when the attitude of the vehicle changes, for example, when the vehicle passes over speed bumps, depressions or rocks, or the vehicle goes uphill or downhill. Furthermore, a second coordinate transformation matrix between a rendering coordinate system and a virtual camera coordinate system in rendering space can be corrected by determining an eye gaze transformation matrix for the eye of the driver in the vehicle coordinate system before and after attitude change of the vehicle. When the HUD uses the corrected first coordinate transformation matrix and the corrected second coordinate transformation matrix to draw the virtual image, a position of the virtual image can be adjusted accordingly with changes in the attitude of the vehicle, thereby ensuring that an icon in the virtual image viewed by the driver and a position of an actual object are aligned in real time, avoiding dizziness of the driver and affection on driving experience. An implementation procedure of the present disclosure is described in detail below.

### Embodiment 1

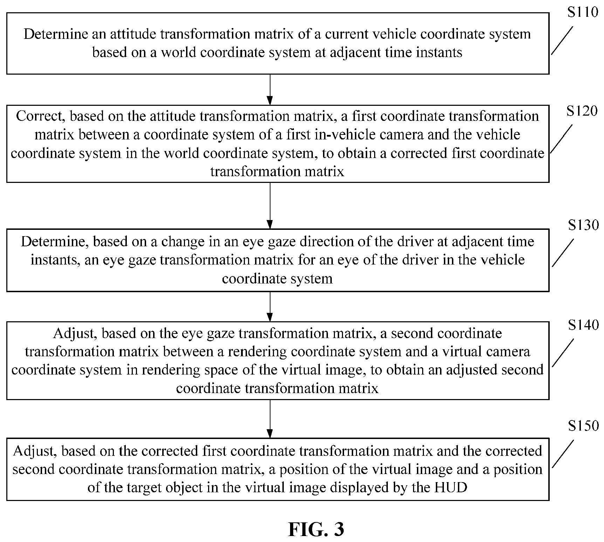

FIG. 3 is a flowchart of a method for adjusting an image of an in-vehicle head-up display according to Embodiment 1 of the present disclosure. The method is applied to an in-vehicle terminal such as a Head-Up Display (HUD) or a server, and the present disclosure does not limit this. The method provided by this embodiment may be applied to application scenarios where the attitude of the vehicle changes, such as when a vehicle passes over speed bumps, depressions or rocks, or the vehicle goes uphill or downhill. As shown in FIG. 3, the method provided by this embodiment specifically includes the following steps.

In S110, an attitude transformation matrix of a current vehicle coordinate system based on a world coordinate system at adjacent time instants is determined.

The adjacent time instants refer to a current time instant and a previous time instant before the current time instant. The world coordinate system, also known as a geodetic coordinate system, is an absolute coordinate system that does not rotate with an object. The vehicle coordinate system is a coordinate system on the vehicle body itself. The vehicle coordinate system typically takes a center of a rear axle of the vehicle as origin, takes a driving direction of the vehicle as an X-axis, takes a direction perpendicular to the X-axis upwardly as a Z-axis, and takes a direction perpendicular to both the X-axis and Z-axis as a Y-axis. A method for setting a position of the vehicle coordinate system is not specifically limited in this embodiment.

In this embodiment, the attitude transformation matrix of the current vehicle coordinate system based on the world coordinate system at adjacent time instants may be obtained based on current attitude information of a current vehicle in the world coordinate system at the current time instant and the historical attitude information of the current vehicle in the world coordinate system at the previous time instant. Attitude information of the vehicle in the world coordinate system at each time instant may be obtained by measuring through an in-vehicle inertial measurement unit (IMU). The in-vehicle IMU is installed at the origin of the vehicle coordinate system. Initial attitude of the IMU is taken as a unit matrix. The current attitude information of the current vehicle in the world coordinate system at the current time instant may be determined based on attitude change of the IMU at the current time instant.

In an embodiment, the attitude change of the IMU at the current time instant may be expressed as θ = (θₓ, θ_{y}, θ_{z}). In these parameters, θₓ represents a roll angle about the X-axis, θ_{y} represents a pitch angle about the Y-axis, and θ_{z} represents a yaw angle about the Z-axis. These angles are obtained by integrating angular velocity information measured by an angular velocity meter of the IMU.

First rotation matrix Mₓ(t) around the X-axis, second rotation matrix M_{y}(t) around the Y-axis and third rotation matrix M_{z}(t) around the Z-axis of the current vehicle in the world coordinate system at the current time instant are determined based on the attitude change of the IMU at the current time instant, where specific formulas for each rotation matrix are as follows: ${M}_{x} \left(t\right) = \left[\begin{matrix}1 & 0 & 0 \\ 0 & cos {θ}_{x} & sin {θ}_{x} \\ 0 & - sin {θ}_{x} & cos {θ}_{x}\end{matrix}\right] ;$ ${M}_{y} \left(t\right) = \left[\begin{matrix}cos {θ}_{y} & 0 & - sin {θ}_{y} \\ 0 & 1 & 0 \\ sin {θ}_{y} & 0 & cos {θ}_{y}\end{matrix}\right] ;$ and ${M}_{z} \left(t\right) = \left[\begin{matrix}cos {θ}_{z} & sin {θ}_{z} & 0 \\ - sin {θ}_{z} & cos {θ}_{z} & 0 \\ 0 & 0 & 1\end{matrix}\right] .$

In this embodiment, a vehicle attitude transformation matrix may be obtained by three times of rotations in an order of the Z-axis, the Y-axis and the X-axis. That is, the third rotation matrix, the second rotation matrix and the first rotation matrix are multiplied sequentially to obtain the current attitude information ${M}_{b}^{i} \left(t\right)$ of the current vehicle in the world coordinate system at the current time instant, where the specific formula is: ${M}_{b}^{i} \left(t\right) = {M}_{z} \left(t\right) {M}_{y} \left(t\right) {M}_{x} \left(t\right) ,$ where *t* represents a time instant, the subscript *b* represents the vehicle coordinate system, and the superscript i represents an IMU coordinate system, which may be used as the world coordinate system in this embodiment.

Therefore, by independently determining the rotation matrix of each axis, attitude change of each axis is determined, and accuracy of single-axis attitude description is improved. The third rotation matrix, the second rotation matrix and the first rotation matrix are multiplied sequentially in the order of the Z-axis, the Y-axis and the X-axis, calculation is performed step by step and fused in an orderly manner, and the current attitude information of the vehicle is obtained accurately in real-time.

The attitude transformation matrix $M b \left(t-1\right) b \left(t\right) i$ of the current vehicle coordinate system based on the world coordinate system at adjacent time instants may be obtained based on current attitude information ${M}_{b}^{i} \left(t\right)$ of the current vehicle in the world coordinate system at the current time instant and the historical attitude information ${M}_{b}^{i} \left(t-1\right)$ of the vehicle in the world coordinate system at the previous time instant, which may be expressed by the following formula: $M b \left(t-1\right) b \left(t\right) i = {M}_{b}^{i} \left(t-1\right) {\left[{M}_{b}^{i}\left(t\right)\right]}^{T} ,$ where ${\left[{M}_{b}^{i}\left(t\right)\right]}^{T}$ represents transpose of ${M}_{b}^{i} \left(t\right)$.

Therefore, dynamic changes in the attitude of the vehicle are accurately reflected, and real-time performance and accuracy of attitude transformation between the vehicle coordinate system and the world coordinate system are improved. By accurately calculating the attitude transformation matrix of the vehicle coordinate system based on the world coordinate system at adjacent time instants, and correcting the subsequent first coordinate transformation matrix and second coordinate transformation matrix accordingly, it is ensured that a position of the virtual image drawn by the HUD may be adjusted in real time according to the changes in the attitude of the vehicle. An icon in the virtual image viewed by the driver is precisely aligned with a position of an actual object, effectively avoiding dizziness caused by visual misalignment, reducing driver distraction, and thus improving overall driving experience and safety.

In S120, a first coordinate transformation matrix between a coordinate system of a first in-vehicle camera and the vehicle coordinate system is corrected based on the attitude transformation matrix to obtain a corrected first coordinate transformation matrix.

The first in-vehicle camera is a camera of an advanced driving assistance system (ADAS) of the vehicle. The camera is used to capture a target object outside the vehicle. The target object may be other vehicles, obstacles, signs, or traffic markings, etc., which is not specifically limited in this embodiment.

Those skilled in the art can understand that when drawing a virtual image of the HUD, a MVP matrix (that is, a collective term for a model matrix, a view matrix, and a projection matrix) of Open Graphics Library (OpenGL) may be used to draw the image. In the MVP matrix, the M matrix transforms the object from model space to world space, that is, transforms the object from its own coordinate system to a rendering coordinate system. In this embodiment, the rendering coordinate system completely coincides with the vehicle coordinate system; that is, a reference for model rendering is the vehicle coordinate system. Therefore, in this embodiment, the M matrix is the first coordinate transformation matrix between the coordinate system of the first in-vehicle camera and the vehicle coordinate system based on the world coordinate system. In practical applications, due to changes in the attitude of the vehicle, a position of the target object captured by the first in-vehicle camera also changes relatively. Therefore, to ensure that a position of the rendered object remains unchanged while keeping a position of a virtual camera constant in rendering space, the attitude transformation matrix obtained from step S110 may be used to correct the M matrix of OpenGL, that is, the first coordinate transformation matrix between the coordinate system of the first in-vehicle camera and the vehicle coordinate system in the world coordinate system in this embodiment.

In an embodiment, a correction procedure for the first coordinate transformation matrix may be as follows.

First, the three-dimensional attitude transformation matrix $M b \left(t-1\right) b \left(t\right) i$ is expanded into a four-dimensional rotation and translation matrix $T b \left(t-1\right) b \left(t\right) i$, to unify dimensions with subsequent matrices. The specific expansion method may be as follow. A one-dimensional matrix with elements of 0 is added to the next column of the three-dimensional attitude rotation matrix $M b \left(t-1\right) b \left(t\right) i$. Since the three-dimensional attitude rotation matrix $M b \left(t-1\right) b \left(t\right) i$ is a 3 ×3 matrix, and the added column matrix is a 3×1 matrix, it is also necessary to add a 1x4 matrix to the last row of the matrix, where the elements of the 1×4 matrix are (0 0 0 1), and a 4×4 rotation and translation matrix is obtained. After expanding the three-dimensional attitude transformation matrix $M b \left(t-1\right) b \left(t\right) i$ into the four-dimensional rotation and translation matrix $T b \left(t-1\right) b \left(t\right) i$, the rotation and translation matrix $T b \left(t-1\right) b \left(t\right) i$ is added to the current M-matrix that is rendering by OpenGL. An addition procedure involves multiplying the rotation and translation matrix $T b \left(t-1\right) b \left(t\right) i$ by the current M-matrix, to obtain the corrected first coordinate transformation matrix, which may be expressed by the following formula: ${M}_{M}^{′} = T b \left(t-1\right) b \left(t\right) i {M}_{M} = T b \left(t-1\right) b \left(t\right) i \left[\begin{matrix}{M}_{a}^{b} & {L}_{a} \\ 0 & 1\end{matrix}\right] ,$ where ${M}_{a}^{b}$ is a three-dimensional matrix representing a rotation matrix between the coordinate system of the first in-vehicle camera and the vehicle coordinate system in the world coordinate system; ***L**ₐ =* [*s,* 0, *h*]*^{T}* represents a translation matrix from origin of the coordinate system of the first in-vehicle camera to the origin of the vehicle coordinate system, s represents a distance difference in an X-direction between a center of a rear axle of the vehicle and a lateral center of the vehicle, h represents a distance difference in an Z-direction between the center of the rear axle of the vehicle and the lateral center of the vehicle, ${M}_{M} = \left[\begin{matrix}{M}_{a}^{b} & {L}_{a} \\ 0 & 1\end{matrix}\right]$ represents the M-matrix before correction, that is, the first coordinate transformation matrix between the coordinate system of the first in-vehicle camera and the vehicle coordinate system based on the world coordinate system before correction, and ${M}_{M}^{′}$ represents the corrected first coordinate transformation matrix.

Furthermore, the corrected M-matrix may be used to transform a target object recognized by the first in-vehicle camera into a rotated vehicle coordinate system, thereby adjusting a position of the target object and preventing the virtual image from jittering due to changes in the attitude of the vehicle, which may achieved through the following formula: $\left[\begin{matrix}P ′ \\ 1\end{matrix}\right] = T b \left(t-1\right) b \left(t\right) i \left[\begin{matrix}{M}_{a}^{b} & {L}_{a} \\ 0 & 1\end{matrix}\right] \left[\begin{matrix}P \\ 1\end{matrix}\right] ,$ where **P** is a 3×1 matrix representing position information of the target object in the coordinate system of the first in-vehicle camera, and P' is a 3×1 matrix representing position information of the target object in the rotated vehicle coordinate system, which also represents first position information of the target object in a rotated rendering coordinate system.

Therefore, the rotation matrix between the coordinate system of the first in-vehicle camera and the vehicle coordinate system in the world coordinate system, and a translation matrix from the origin of the coordinate system of the first in-vehicle camera to the origin of the vehicle coordinate system are processed based on the attitude transformation matrix of the current vehicle coordinate system based on the world coordinate system at adjacent time instants, to obtain the corrected first coordinate transformation matrix. Therefore, the corrected M-matrix may be used to transform the target object recognized by the first in-vehicle camera into the rotated vehicle coordinate system (that is, the rendering coordinate system), and accuracy of the position information of the target object is ensured. It is ensure that a position of a virtual object in the rendering space remains unchanged when the attitude of the vehicle changes, effectively preventing jittering of the virtual image of HUD caused by the changes in the attitude of the vehicle, and improving stability of virtual image display.

In S130, an eye gaze transformation matrix for an eye of the driver in the vehicle coordinate system is determined based on a change in an eye gaze direction of the driver at adjacent time instants.

The eye of the driver may be recognized and tracked by a second in-vehicle camera in a driver monitoring system (DMS). The DMS may also detect changes in the line of sight of the driver, that is, changes in a gaze direction of the driver. In this embodiment, the change in the eye gaze direction of the driver may be represented by a rotation matrix for the eye gaze direction of the driver and a position transformation matrix for the eye of the driver. Therefore, based on the rotation matrix for the eye gaze direction of the driver and the positional transformation matrix for the eye of the driver at adjacent time instants, dynamic transformation information of the eye of the driver in the vehicle coordinate system is accurately obtained, improving accuracy of analysis for a visual state of the driver.

Those skilled in the art should understand that, when drawing the virtual image of the HUD, a V matrix in the MVP matrix transforms coordinates in the world space to visual space, that is, transforms the object in the rendering coordinate system to a camera coordinate system in the rendering space. In this embodiment, when the attitude of the vehicle changes, a position of the eye of the driver relative to the vehicle coordinate system changes. To ensure that the position of the virtual image seen by the driver does not change, a position of a camera in the rendering space also needs to be adjusted accordingly, that is, the V matrix in a rendering pipeline of OpenGL needs to be adjusted. In this embodiment, the V matrix may be adjusted based on an eye gaze transformation matrix for the eye of the driver.

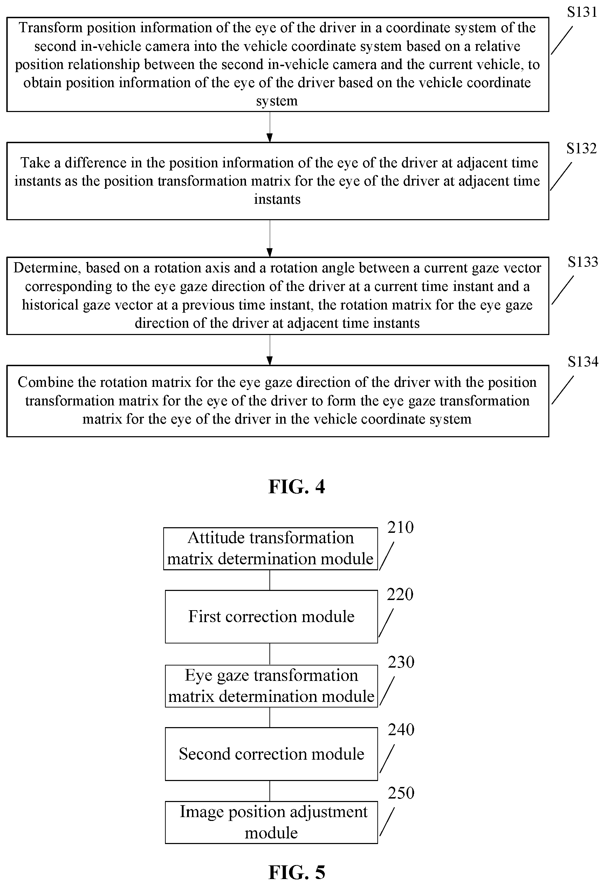

In this embodiment, as shown in FIG. 4, the eye gaze transformation matrix for the eye of the driver may be determined through the following steps S131 to S134.

In S131, position information of the eye of the driver in a coordinate system of the second in-vehicle camera is transformed into the vehicle coordinate system based on a relative position relationship between the second in-vehicle camera and the current vehicle, to obtain position information of the eye of the driver based on the vehicle coordinate system.

A position relationship between the second in-vehicle camera and the vehicle is fixed, that is, a position transformation relationship between the coordinate system of the second in-vehicle camera and the vehicle coordinate system is fixed.

In this embodiment, step S131 may be implemented through the following formula: $\left[\begin{matrix}{x}_{e}^{b} \\ {y}_{e}^{b} \\ {z}_{e}^{b}\end{matrix}\right] = {M}_{d}^{b} \left[\begin{matrix}{x}_{e}^{d} \\ {y}_{e}^{d} \\ {z}_{e}^{d}\end{matrix}\right] + {s}_{d}^{b} ,$ where $\left[\begin{matrix}{x}_{e}^{d} \\ {y}_{e}^{d} \\ {z}_{e}^{d}\end{matrix}\right]$ represents the position information of the eye of the driver in the coordinate system of the second in-vehicle camera, $\left[\begin{matrix}{x}_{e}^{b} \\ {y}_{e}^{b} \\ {z}_{e}^{b}\end{matrix}\right]$ represents the position information of the eye of the driver in the vehicle coordinate system, ${M}_{d}^{b}$ represents a rotation matrix from the coordinate system of the second in-vehicle camera to the vehicle coordinate system, and ${s}_{d}^{b}$ represents a translation matrix from the coordinate system of the second in-vehicle camera to the vehicle coordinate system.

In S132, a difference in the position information of the eye of the driver at adjacent time instants is taken as the position transformation matrix for the eye of the driver at adjacent time instants.

The position transformation matrix for the eye of the driver may be represented by the following formula: $\left[\begin{matrix}Δ x \\ Δ y \\ Δ z\end{matrix}\right] = \left[\begin{matrix}{x}_{e}^{b} \left(t\right) \\ {y}_{e}^{b} \left(t\right) \\ {z}_{e}^{b} \left(t\right)\end{matrix}\right] - \left[\begin{matrix}{x}_{e}^{b} \left(t-1\right) \\ {y}_{e}^{b} \left(t-1\right) \\ {z}_{e}^{b} \left(t-1\right)\end{matrix}\right] ,$ where *t* represents a time instant, $\left[\begin{matrix}{x}_{e}^{b} \left(t\right) \\ {y}_{e}^{b} \left(t\right) \\ {z}_{e}^{b} \left(t\right)\end{matrix}\right]$ represents the position information of the eye of the driver in the vehicle coordinate system at the current time instant, $\left[\begin{matrix}{x}_{e}^{b} \left(t-1\right) \\ {y}_{e}^{b} \left(t-1\right) \\ {z}_{e}^{b} \left(t-1\right)\end{matrix}\right]$ represents the position information of the eye of the driver in the vehicle coordinate system at the previous time instant before the current time instant, and $\left[\begin{matrix}Δ x \\ Δ y \\ Δ z\end{matrix}\right]$ represents the position transformation matrix for the eye of the driver at adjacent time instants.

Therefore, by transforming a position of the eye in the camera coordinate system into the vehicle coordinate system, coordinate systems are unified, and consistency and accuracy of position information of the eye are improved. By using the difference in positions of the eye between adjacent time instants as the position transformation matrix, dynamic changes in the position of the eye can be captured in real time, a scenario involving driver head movement is adapted to, and real-time performance of position change description is improved. By determining the rotation matrix through a rotation axis and a rotation angle of a current gaze vector and a historical gaze vector, rotation change in the gaze direction is accurately described. By forming the eye gaze transformation matrix through combining the rotation matrix and the position transformation matrix, dynamic changes in the position of the eye and the gaze direction are comprehensively reflected, and comprehensiveness and accuracy of description for state changes in the eye of the driver at adjacent time instants are improved.

In S133, the rotation matrix for the eye gaze direction of the driver at adjacent time instants is determined based on a rotation axis and a rotation angle between a current gaze vector corresponding to the eye gaze direction of the driver at a current time instant and a historical gaze vector at a previous time instant.

In this embodiment, the DMS can detect the eye gaze direction of the driver, determine a unit vector for the eye gaze direction of the driver at the current time instant as z(t), and determine a unit vector for the eye gaze direction of the driver at the previous time instant as z(t - 1). The rotation axis of the gaze vectors corresponding to the eye gaze direction of the driver at these two adjacent time instants may be obtained by performing a cross product of the two unit vectors, that is: $i = z \left(t-1\right) \times z \left(t\right) .$

Furthermore, the rotation angle δ between the gaze vectors corresponding to the eye gaze direction of the driver at these two adjacent time instants may be obtained by performing a dot product of the two unit vectors, as shown in the following formula: $cos \left(δ\right) = \frac{z \left(t-1\right) z \left(t\right)}{\left‖z\left(t-1\right)\right‖ \times \left‖z\left(t\right)\right‖} .$

The above rotation axis and rotation angle may be converted into the rotation matrix ${M}_{z \left(t-1\right)}^{z \left(t\right)}$ based on the Rodrigues formula.

Therefore, by combining vector data from adjacent time instants through the Rodrigues formula, the rotation matrix may be quickly generated, requirements of real-time monitoring of the gaze direction of the driver are satisfied, and accurate quantification of a rotation procedure of the gaze direction at adjacent time instants is facilitated.

In S 134, the rotation matrix for the eye gaze direction of the driver is combined with the position transformation matrix for the eye of the driver to form the eye gaze transformation matrix for the eye of the driver in the vehicle coordinate system.

The rotation matrix ${M}_{z \left(t-1\right)}^{z \left(t\right)}$ obtained in step S134 is combined with the position transformation matrix obtained in step S132, to obtain the eye gaze transformation matrix for the eye of the driver in the vehicle coordinate system, that is, a homogeneous translation-rotation matrix ${T}_{d \left(t-1\right)}^{d \left(t\right)}$. The purpose of combining the rotation matrix ${M}_{z \left(t-1\right)}^{z \left(t\right)}$ obtained in step S134 with the position transformation matrix obtained in step S132 is to combine the three-dimensional rotation matrix ${M}_{z \left(t-1\right)}^{z \left(t\right)}$ with a one-dimensional position transformation matrix into the four-dimensional rotation and translation matrix $T b \left(t-1\right) b \left(t\right) i$. The combination principle is similar to the method described above for expanding the three-dimensional attitude transformation matrix ${M}_{z \left(t-1\right)}^{z \left(t\right)}$ into the four-dimensional rotation-translation matrix $T b \left(t-1\right) b \left(t\right) i$. Specifically, a 3×1 position transformation matrix is added to the next column of the 3×3 rotation matrix ${M}_{z \left(t-1\right)}^{z \left(t\right)}$, and then a 1×4 matrix (0 0 0 1) is added to the last row of the matrix, to obtain the 4×4 eye gaze transformation matrix ${T}_{d \left(t-1\right)}^{d \left(t\right)}$, which may be expressed by the following formula: ${T}_{d \left(t-1\right)}^{d \left(t\right)} = \left[\begin{matrix}{M}_{z \left(t-1\right)}^{z \left(t\right)} & {ΔL}_{e} \\ 0 & 1\end{matrix}\right] ,$ where ${ΔL}_{e} = \left[\begin{matrix}Δ x \\ Δ y \\ Δ z\end{matrix}\right]$ represents the position transformation matrix for the eye of the driver at adjacent time instants.

In S140, a second coordinate transformation matrix between the rendering coordinate system and a virtual camera coordinate system in rendering space of the virtual image is corrected based on the eye gaze transformation matrix to obtain a corrected second coordinate transformation matrix.

In this embodiment, the position transformation matrix between the rendering coordinate system and the virtual camera coordinate system in the rendering space of the virtual image is corrected based on the eye gaze transformation matrix, that is, the V matrix in OpenGL is corrected. In an embodiment, the eye gaze transformation matrix ${T}_{d \left(t-1\right)}^{d \left(t\right)}$ is multiplied ***M**_{V}* by the current second coordinate transformation matrix ***M**_{V}*, that is, ${M}_{V}^{′} = {T}_{d \left(t-1\right)}^{d \left(t\right)} {M}_{V}$, to obtain the corrected second coordinate transformation matrix. Therefore, by correcting the second coordinate transformation matrix, a position of the virtual camera coordinate system at the rendering coordinate system in the rendering space changes with the attitude of the vehicle. By using the corrected second coordinate transformation matrix, the attitude information of the object in the rendering coordinate system may be converted to the corrected virtual camera coordinate system, subsequent adjustment to the position of the virtual image is facilitated, and it is ensured that the position of the virtual image seen by the driver is adjusted accordingly when the attitude of the vehicle changes.

In S150, the position of the virtual image and the position of the target object in the virtual image displayed on the HUD are adjusted based on the corrected first coordinate transformation matrix and the corrected second coordinate transformation matrix.

Those skilled in the art should understand that when drawing the virtual image in the rendering space using the MVP matrix of OpenGL, the position of the target object is transformed into the vehicle coordinate system (that is, the rendering coordinate system) by using the corrected first position matrix (that is, the corrected M matrix). Then, the corrected second position matrix (that is, the corrected V matrix) transforms the target object from the rendering coordinate system into the virtual camera coordinate system in the rendering space. Finally, the target object in the virtual camera coordinate system is projected onto a 2D screen of the HUD by using the projection matrix. In this embodiment, when the attitude of the vehicle changes, by correcting the first position matrix, the position of the target object in the virtual image seen by the driver may be adjusted, and by correcting the second position matrix, the position of the virtual image seen by the driver may be adjusted. It is ensured that the position of the virtual image seen by the driver and the position of the target object in the virtual image are adjusted accordingly when the attitude of the vehicle changes, a problem of misalignment between the position of the target object and an actual position when the attitude of the vehicle changes is solved.

In this embodiment, when attitude of a vehicle changes, a first coordinate transformation matrix between a coordinate system of a first in-vehicle camera and a vehicle coordinate system in the world coordinate system, and a second coordinate transformation matrix between a rendering coordinate system and a virtual camera coordinate system in rendering space are corrected. When drawing a virtual image by using the corrected first coordinate transformation matrix, the corrected second coordinate transformation matrix and a projection matrix, a position of the virtual image and a position of a target object in the virtual image can be adjusted accordingly to changes in the attitude of the vehicle. That is, when the attitude of the vehicle changes, the position of the target object in the virtual image can also be aligned with an actual position of the target object, avoiding driver dizziness caused by misalignment of the target object in the virtual image with an actual target object, thus improving driving experience of a driver.

### Embodiment 2

FIG. 5 is a structural block diagram of an apparatus for adjusting an image of an in-vehicle head-up display (HUD) according to Embodiment 2 of the present disclosure. As shown in FIG. 5, the apparatus includes: an attitude transformation matrix determination module 210, a first correction module 220, an eye gaze transformation matrix determination module 230, a second correction module 240, and an image position adjustment module 250, where
the attitude transformation matrix determination module 210 is configured to determine an attitude transformation matrix of a current vehicle coordinate system based on a world coordinate system at adjacent time instants;
the first correction module 220 is configured to correct, based on the attitude transformation matrix, a first coordinate transformation matrix between a coordinate system of a first in-vehicle camera and a vehicle coordinate system in the world coordinate system, to obtain a corrected first coordinate transformation matrix, where the first coordinate transformation matrix is to transform position information of a target object in the coordinate system of the first in-vehicle camera into the vehicle coordinate system;
the eye gaze transformation matrix determination module 230 is configured to determine, based on a rotation matrix for a gaze direction for an eye of the driver and a position transformation matrix for the eye of the driver at adjacent time instants, an eye gaze transformation matrix for the eye of the driver in the vehicle coordinate system, where the eye of the driver is recognized by a second in-vehicle camera;
the second correction module 240 is configured to correct, based on the eye gaze transformation matrix, a second coordinate transformation matrix between a rendering coordinate system and a virtual camera coordinate system in rendering space of the virtual image, to obtain a corrected second coordinate transformation matrix, where the second coordinate transformation matrix is to transform a position of the target object in the rendering coordinate system into the virtual camera coordinate system, and the rendering coordinate system is consistent with the vehicle coordinate system; and
the image position adjustment module 250 is configured to adjust, based on the corrected first coordinate transformation matrix and the corrected second coordinate transformation matrix, a position of the virtual image and a position of the target object in the virtual image displayed by the HUD.

In an embodiment, the attitude transformation matrix determination module 210 includes:
an attitude information determination unit, configured to determine current attitude information of a current vehicle in the world coordinate system at a current time instant, and obtaining historical attitude information of the current vehicle in the world coordinate system at a previous time instant; and
an attitude transformation matrix determination unit, configured to determine, based on the current attitude information and the historical attitude information, the attitude transformation matrix of the current vehicle coordinate system based on the world coordinate system at adjacent time instants.

In an embodiment, the attitude information determination unit includes:
an attitude information determination subunit, configured to determine, based on attitude change of an inertial measurement unit (IMU) at the current time instant, the current attitude information of the current vehicle in the world coordinate system at the current time instant.

In an embodiment, the attitude information determination subunit is specifically configured to:
determine, based on the attitude change of the IMU at the current time instant, a first rotation matrix around an X-axis, a second rotation matrix around a Y-axis and a third rotation matrix around a Z-axis of the current vehicle in the world coordinate system at the current time instant, where the X-axis, the Y-axis and the Z-axis are perpendicular to each other; and
multiply the third rotation matrix, the second rotation matrix and the first rotation matrix sequentially, to obtain the current attitude information of the current vehicle in the world coordinate system at the current time instant.

In an embodiment, the eye gaze transformation matrix determination module 230 includes:
an eye gaze transformation matrix determination unit, configured to determine, based on the change in the eye gaze direction of the driver, a rotation matrix for the eye gaze direction of the driver and a position transformation matrix for the eye of the driver at adjacent time instants, the eye gaze transformation matrix for the eye of the driver in the vehicle coordinate system.

In an embodiment, the eye gaze transformation matrix determination unit includes:
an eye position information determination subunit, configured to transform, based on a relative position relationship between the second in-vehicle camera and the current vehicle, position information of the eye of the driver in a coordinate system of the second in-vehicle camera into the vehicle coordinate system, to obtain position information of the eye of the driver based on the vehicle coordinate system;
an eye position transformation matrix determination subunit, configured to take a difference in the position information of the eye of the driver at adjacent time instants as the position transformation matrix for the eye of the driver at adjacent time instants;
a gaze direction rotation matrix determination subunit, configured to determine, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants; and
an eye gaze transformation matrix forming subunit, configured to combine the rotation matrix for the eye gaze direction of the driver at adjacent time instants and the position transformation matrix for the eye of the driver at adjacent time instants to form the eye gaze transformation matrix for the eye of the driver in the vehicle coordinate system.

In an embodiment, the gaze direction rotation matrix determination sub-unit is specifically configured to:
form, based on the Rodrigues formula, the rotation matrix for the eye gaze direction of the driver at adjacent time instants by using the rotation axis and the rotation angle between the current gaze vector corresponding to the eye gaze direction of the driver at the current time instant and the historical gaze vector at the previous time instant,
where the rotation axis and the rotation angle between the current gaze vector corresponding to the eye gaze direction of the driver at the current time instant and the historical gaze vector at the previous time instant are respectively obtained based on: $i = z \left(t-1\right) \times z \left(t\right) ;$ and $cos \left(δ\right) = \frac{z \left(t-1\right) z \left(t\right)}{\left‖z\left(t-1\right)\right‖ \times \left‖z\left(t\right)\right‖} ,$
where z(t) represents the current gaze vector corresponding to the eye gaze direction of the driver at the current time instant, z(t - 1) represents the historical gaze vector corresponding to the eye gaze direction of the driver at the previous time instant, i represents the rotation axis between the current gaze vector and the historical gaze vector at the previous time instant, and *δ* represents the rotation angle between the current gaze vector and the historical gaze vector at the previous time instant.

In an embodiment, the first correction module 220 is specifically configured to:
correct the first coordinate transformation matrix between the coordinate system of the first in-vehicle camera and the vehicle coordinate system in the world coordinate system based on: ${M}_{M}^{′} = T b \left(t-1\right) b \left(t\right) i {M}_{M} ,$
where ${M}_{M}^{′}$ represents the corrected first coordinate transformation matrix, ***M**_{M}* represents a first coordinate transformation matrix before correction, and $T b \left(t-1\right) b \left(t\right) i$ represents the attitude transformation matrix of the current vehicle coordinate system based on the world coordinate system at adjacent time instants; and
the second correction module 240 is specifically configured to:
   correct the second coordinate transformation matrix between the rendering coordinate system and the virtual camera coordinate system in the rendering space of the virtual image based on: ${M}_{V}^{′} = {T}_{d \left(t-1\right)}^{d \left(t\right)} {M}_{V} ,$
   where ${M}_{V}^{′}$ represents the corrected second coordinate transformation matrix, ***M**_{V}* represents a second coordinate transformation matrix before correction, and ${T}_{d \left(t-1\right)}^{d \left(t\right)}$ represents an eye gaze transformation matrix for the eye of the driver in the vehicle coordinate system at adjacent time instants.

### Embodiment 3

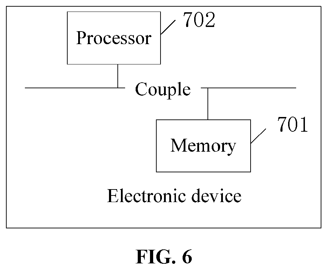

Referring to FIG. 6, FIG. 6 is a schematic structural diagram of an electronic device according to Embodiment 3 of the present disclosure. As shown in FIG. 6, the electronic device includes:
a memory 701 storing an executable program code; and
a processor 702 coupled to the memory 701,
where the processor 702 calls the executable program code stored in the memory 701 to perform the method for adjusting the image of an in-vehicle head-up display (HUD) provided by any embodiment of the present disclosure.

The present disclosure discloses a computer-readable storage medium storing a computer program, where the computer program causes a computer to perform the method for adjusting the image of an in-vehicle head-up display (HUD) provided by any embodiment of the present disclosure.

In various embodiments of the present disclosure, it should be understood that the sequence number of the above procedures does not necessarily imply a sequential order of execution. The execution order of each procedure should be determined by its function and internal logic, and should not constitute any limitation on the implementation procedure of the embodiments of the present disclosure.

In the embodiments provided by the present disclosure, it should be understood that "B corresponding to A" means that B is associated with A, and B may be determined based on A. However, it should also be understood that determining B based on A does not mean determining B solely based on A; B can also be determined based on A and/or other information.

Furthermore, the functional units in the various embodiments of the present disclosure may be integrated into one processing unit, or each unit can exist physically separately, or two or more units may be integrated into one unit. The integrated unit may be implemented in hardware or as a software functional unit.

If the integrated unit is implemented as a software functional unit and sold or used as an independent product, it may be stored in a computer-accessible memory. Based on this understanding, the technical solution of the present disclosure, in essence, or the part that contributes to the related art, or all or part of the technical solution, may be embodied in the form of a software product. The computer software product is stored in a memory and includes several requests to cause a computer device (which may be a personal computer, a server, or a network device, specifically a processor in the computer device) to perform some or all of the steps of the methods described in the various embodiments of the present disclosure.

Those skilled in the art should understand that all or part of the steps in the various methods of the above embodiments may be implemented by a program instructing related hardware. This program may be stored in a computer-readable storage medium, including a read-only memory (ROM), a random access memory (RAM), a programmable read-only memory (PROM), an erasable programmable read only memory (EPROM), a one-time programmable read-only memory (OTPROM), an electronically-erasable programmable read-only memory (EEPROM), a compact disc read-only memory (CD-ROM) or other optical disc storage, disk storage, magnetic tape storage, or any other computer-readable medium capable of carrying or storing data.

Those skilled in the art should understand that the accompanying drawings are merely schematic diagrams of one embodiment, and the modules or processes shown in the drawings are not necessarily essential for implementing the present disclosure.

Those skilled in the art should understand that the modules in the apparatus of the embodiments may be distributed in the apparatus of the embodiments as described in the embodiments, or they may be located in one or more devices different from this embodiment with corresponding changes. The modules of the above embodiments may be combined into one module, or they may be further divided into multiple sub-modules.

Finally, it should be noted that the above embodiments are only used to illustrate the technical solutions of the present disclosure, and not to limit it. Although the present disclosure is described in detail with reference to the foregoing embodiments, those skilled in the art should understand that modifications can still be made to the technical solutions described in the foregoing embodiments, or equivalent substitutions may be made to some of the technical features. These modifications or substitutions do not cause the essence of the corresponding technical solutions to deviate from the spirit and scope of the technical solutions of the embodiments of the present disclosure.

## Claims

1. A method for adjusting an image of an in-vehicle head-up display (HUD), **characterized in that**, wherein the HUD is to display vehicle operation information and driving assistance information through a virtual image, and the method comprises:
determining an attitude transformation matrix of a current vehicle coordinate system based on a world coordinate system at adjacent time instants;
correcting, based on the attitude transformation matrix, a first coordinate transformation matrix between a coordinate system of a first in-vehicle camera and the vehicle coordinate system in the world coordinate system, to obtain a corrected first coordinate transformation matrix, wherein the first coordinate transformation matrix is to transform position information of a target object in the coordinate system of the first in-vehicle camera into the vehicle coordinate system;
determining, based on a change in an eye gaze direction of a driver at adjacent time instants, an eye gaze transformation matrix for an eye of the driver in the vehicle coordinate system, wherein the eye of the driver is recognized by a second in-vehicle camera;
correcting, based on the eye gaze transformation matrix, a second coordinate transformation matrix between a rendering coordinate system and a virtual camera coordinate system in rendering space of the virtual image, to obtain a corrected second coordinate transformation matrix, wherein the second coordinate transformation matrix is to transform a position of the target object in the rendering coordinate system into the virtual camera coordinate system, and the rendering coordinate system is consistent with the vehicle coordinate system; and
adjusting, based on the corrected first coordinate transformation matrix and the corrected second coordinate transformation matrix, a position of the virtual image and a position of the target object in the virtual image rendered by the HUD.

2. The method according to claim 1, wherein the determining an attitude transformation matrix of a current vehicle coordinate system based on a world coordinate system at adjacent time instants comprises:
determining current attitude information of a current vehicle in the world coordinate system at a current time instant, and obtaining historical attitude information of the current vehicle in the world coordinate system at a previous time instant; and
determining, based on the current attitude information and the historical attitude information, the attitude transformation matrix of the current vehicle coordinate system based on the world coordinate system at adjacent time instants.

3. The method according to claim 2, wherein the determining current attitude information of a current vehicle in the world coordinate system at a current time instant comprises:
determining, based on attitude change of an inertial measurement unit (IMU) at the current time instant, a first rotation matrix around an X-axis, a second rotation matrix around a Y-axis and a third rotation matrix around a Z-axis of the current vehicle in the world coordinate system at the current time instant, wherein the X-axis, the Y-axis and the Z-axis are perpendicular to each other; and
multiplying the third rotation matrix, the second rotation matrix and the first rotation matrix sequentially, to obtain the current attitude information of the current vehicle in the world coordinate system at the current time instant.

4. The method according to any one of claims 1 to 3, wherein the determining, based on a change in an eye gaze direction of a driver at adjacent time instants, an eye gaze transformation matrix for an eye of the driver in the vehicle coordinate system comprises:
determining, based on a rotation matrix for the eye gaze direction of the driver and a position transformation matrix for the eye of the driver at adjacent time instants, the eye gaze transformation matrix for the eye of the driver in the vehicle coordinate system.

5. The method according to claim 4, wherein the determining, based on a rotation matrix for the eye gaze direction of the driver and a position transformation matrix for the eye of the driver at adjacent time instants, the eye gaze transformation matrix for the eye of the driver in the vehicle coordinate system comprises:
transforming, based on a relative position relationship between the second in-vehicle camera and the current vehicle, position information of the eye of the driver in a coordinate system of the second in-vehicle camera into the vehicle coordinate system, to obtain position information of the eye of the driver based on the vehicle coordinate system;
taking a difference in the position information of the eye of the driver at adjacent time instants as the position transformation matrix for the eye of the driver at adjacent time instants;
determining, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants; and
combining the rotation matrix for the eye gaze direction of the driver at adjacent time instants and the position transformation matrix for the eye of the driver at adjacent time instants to form the eye gaze transformation matrix for the eye of the driver in the vehicle coordinate system.

6. The method according to claim 5, wherein the determining, based on a rotation axis and a rotation angle between a current gaze vector corresponding to the eye gaze direction of the driver at a current time instant and a historical gaze vector at a previous time instant, the rotation matrix for the eye gaze direction of the driver at adjacent time instants comprises:
forming, based on the Rodrigues formula, the rotation matrix for the eye gaze direction of the driver at adjacent time instants by using the rotation axis and the rotation angle between the current gaze vector corresponding to the eye gaze direction of the driver at the current time instant and the historical gaze vector at the previous time instant,
wherein the rotation axis and the rotation angle between the current gaze vector corresponding to the eye gaze direction of the driver at the current time instant and the historical gaze vector at the previous time instant are respectively obtained based on: $i = z \left(t-1\right) \times z \left(t\right) ;$ and $cos \left(δ\right) = \frac{z \left(t-1\right) z \left(t\right)}{\left‖z\left(t-1\right)\right‖ \times \left‖z\left(t\right)\right‖} ,$
wherein ***z***(*t*) represents the current gaze vector corresponding to the eye gaze direction of the driver at the current time instant, ***z***(*t* - 1) represents the historical gaze vector corresponding to the eye gaze direction of the driver at the previous time instant, ***i*** represents the rotation axis between the current gaze vector and the historical gaze vector at the previous time instant, and *δ* represents the rotation angle between the current gaze vector and the historical gaze vector at the previous time instant.

7. The method according to any one of claims 1 to 6, wherein the correcting, based on the attitude transformation matrix, a first coordinate transformation matrix between a coordinate system of a first in-vehicle camera and the vehicle coordinate system in the world coordinate system comprises:
correcting the first coordinate transformation matrix between the coordinate system of the first in-vehicle camera and the vehicle coordinate system in the world coordinate system based on: ${M}_{M}^{′} = T b \left(t-1\right) b \left(t\right) i {M}_{M} ,$
wherein ${M}_{M}^{′}$ represents the corrected first coordinate transformation matrix, ***M**_{M}* represents a first coordinate transformation matrix before correction, and $T b \left(t-1\right) b \left(t\right) i$ represents the attitude transformation matrix of the current vehicle coordinate system based on the world coordinate system at adjacent time instants; and
wherein the correcting, based on the eye gaze transformation matrix, a second coordinate transformation matrix between a rendering coordinate system and a virtual camera coordinate system in rendering space of the virtual image comprises:
correcting the second coordinate transformation matrix between the rendering coordinate system and the virtual camera coordinate system in the rendering space of the virtual image based on: ${M}_{V}^{′} = {T}_{d \left(t-1\right)}^{d \left(t\right)} {M}_{V} ,$
wherein ${M}_{V}^{′}$ represents the corrected second coordinate transformation matrix, ***M_{V}*** represents a second coordinate transformation matrix before correction, and ${T}_{d \left(t-1\right)}^{d \left(t\right)}$ represents an eye gaze transformation matrix for the eye of the driver in the vehicle coordinate system at adjacent time instants.

8. An apparatus for adjusting an image of an in-vehicle head-up display (HUD), **characterized in that**, wherein the HUD is to display vehicle operation information and driving assistance information through a virtual image, and the apparatus comprises:
an attitude transformation matrix determination module, configured to determine an attitude transformation matrix of a current vehicle coordinate system based on a world coordinate system at adjacent time instants;
a first correction module, configured to correct, based on the attitude transformation matrix, a first coordinate transformation matrix between a coordinate system of a first in-vehicle camera and a vehicle coordinate system in the world coordinate system, to obtain a corrected first coordinate transformation matrix, wherein the first coordinate transformation matrix is to transform position information of a target object in the coordinate system of the first in-vehicle camera into the vehicle coordinate system;
an eye gaze transformation matrix determination module, configured to determine, based on a rotation matrix for a gaze direction for an eye of the driver and a position transformation matrix for the eye of the driver at adjacent time instants, an eye gaze transformation matrix for the eye of the driver in the vehicle coordinate system, wherein the eye of the driver is recognized by a second in-vehicle camera;
a second correction module, configured to correct, based on the eye gaze transformation matrix, a second coordinate transformation matrix between a rendering coordinate system and a virtual camera coordinate system in rendering space of the virtual image, to obtain a corrected second coordinate transformation matrix, wherein the second coordinate transformation matrix is to transform a position of the target object in the rendering coordinate system into the virtual camera coordinate system, and the rendering coordinate system is consistent with the vehicle coordinate system; and
an image position adjustment module, configured to adjust, based on the corrected first coordinate transformation matrix and the corrected second coordinate transformation matrix, a position of the virtual image and a position of the target object in the virtual image displayed by the HUD.

9. An electronic device, comprising:
one or more processors; and
a storage device, configured to store one or more programs,
wherein when executing by the one or more processors, the one or more programs cause the one or more processors to perform the method for adjusting an image of an in-vehicle head-up display (HUD) according to any one of claims 1 to 7.

10. A computer-readable storage medium storing a computer program, **characterized in that**, when executed by a processor, the computer program performs the method for adjusting an image of an in-vehicle head-up display (HUD) according to any one of claims 1 to 7.
